# EUROPEAN PATENT SPECIFICATION

(11) **EP 4 102 261 B1**
(45) Date of publication and mention of the grant of the patent: **17.07.2024**
(21) Application number: 22178149.5
(22) Date of filing: 09.06.2022
(51) Int. Cl.: G01W 1/02, G01W 1/14

(54) **EQUIPMENT FOR THE CONTROL AND/OR MOVEMENT OF A COVERING AND/OR CLOSING INSTALLATION COMPRISING A DEVICE FOR DETECTING METEOROLOGICAL AND/OR ENVIRONMENTAL PARAMETERS**
AUSRÜSTUNG ZUR STEUERUNG UND/ODER BEWEGUNG EINER ABDECK- UND/ODER VERSCHLUSSANLAGE UMFASSEND EINE VORRICHTUNG ZUR ERFASSUNG VON WETTER- UND/ODER UMGEBUNGSPARAMETERN
ÉQUIPEMENT POUR COMMANDER ET/OU DÉPLACER UN SYSTÈME DE COUVERTURE ET/OU DE FERMETURE COMPRENANT UN DISPOSITIF DE DÉTECTION DE PARAMÈTRES MÉTÉOROLOGIQUES ET/OU ENVIRONNEMENTAUX

(30) Priority: 11.06.2021 IT 202100015365
(43) Date of publication of application: 14.12.2022
(73) Proprietor: Teleco Automation S.R.L., 31100 Treviso (IT)
(72) Inventor: BORSOI, Luigi, 31012 CAPPELLA MAGGIORE (TV) (IT); COLLOVINI, Roberto, 31100 TREVISO (IT)
(74) Representative: Braidotti, Andrea

(56) References cited:
- EP-A2- 2 426 518
- US-A1- 2010 271 216
- TELECO AUTOMATION: "Sensitivity configuration", 15 November 2018 (2018-11-15), XP055895762, Retrieved from the Internet <URL:https://www.youtube.com/watch?v=ydrtiKgauJ0&ab_channel=TelecoAutomation> [retrieved on 20220225]
- TELECO AUTOMATION S.R.L.: "RAIN102H - RAIN SENSOR", TELECO AUTOMATION S.R.L. CORPORATE WEBSITE, 12 June 2018 (2018-06-12), Colle Umberto (TV) - Italy, XP055895760, Retrieved from the Internet <URL:https://www.telecoautomation.com/au/scheda_prodotto/rain102b/?langIsoCode=au> [retrieved on 20220225]
- ANONYMOUS: "RAIN103 - RAIN SENSOR", TELECO AUTOMATION S.R.L. CORPORATE WEBSITE, 2 March 2018 (2018-03-02), Colle Umberto (TV) - Italy, XP055895765, Retrieved from the Internet <URL:https://www.telecoautomation.com/au/scheda_prodotto/rain103/?reset=1> [retrieved on 20220225]
- ANONYMOUS: "RAIN104 - SENSORE PIOGGIA E NEVE", TELECO AUTOMATION S.R.L. CORPORATE WEBSITE, 6 March 2020 (2020-03-06), Colle Umberto (TV) - Italy, XP055895764, Retrieved from the Internet <URL:https://www.telecoautomation.com/scheda_prodotto/rain104/?langIsoCode=au> [retrieved on 20220225]

## Description

### FIELD OF THE TECHNIQUE

The present invention relates to a device for detecting meteorological and/or environmental parameters, preferably of the type to be installed in a roofing and/or closing element, for example in pergolas, windows, skylights, doors and roofs in general.

### BACKGROUND OF THE INVENTION

Devices are known which allow to detect the presence of rain or other atmospheric conditions, and to wirelessly send a corresponding signal to a processing unit.

Temperature sensors are also known which allow to detect the temperature of an environment and to wirelessly send a corresponding signal to a processing unit.

However, these known solutions are not suitable for signal transmission over long distances, for example equal to or greater than 20 meters, and furthermore they do not allow the correct functioning status of the sensor to be suitably monitored over time.

In particular, the known solutions that use wireless transmissions are configured to send alternately and/or non-continuous information relating to the detections carried out by the sensors and/or the alarm situations identified on the basis of these detections, and this in order to optimize power consumption. For example, the known solutions are configured to send a rain alarm signal at intervals of approximately 30 seconds, while the temperature alarm signal can be sent at intervals of 30 seconds for an hour, and subsequently, if the alarm persists, a signal is sent every hour. Again, the snow alarm signal can be sent at intervals of 30 seconds for one hour, and thereafter, if the alarm persists, a signal is sent every hour.

EP2426518 describes a rain sensor in which, in correspondence with the upper part of the containment body, an antenna is provided for transmitting and/or receiving electromagnetic signals, while in correspondence with the lower part of the containment body there are holes for passage for lines of electrical connections that supply current and electrical voltage to the rain sensor.

US2010/0271216 describes a rain and fog sensor in which an electric power supply cable and a signal transmission cable exit from the containment body.

### OBJECTIVES OF THE INVENTION

The purpose of the invention is to propose an equipment for the control and/or movement of a covering and/or closing installation, for example in pergolas, windows, skylights, doors and roofing in general, which makes it possible to overcome - at least in part - the drawbacks encountered in traditional solutions An equipment for the control and/or movement of a covering and/ or closing installation according to the claimed invention comprises, among others, a device for the detection of meteorological and/or environmental parameters.

Advantageously, an equipment according to the claimed invention comprises a device which allows the communication of signals and data even over long distances.

Advantageously, an equipment according to the claimed invention comprises a device whose correct functioning status can be monitored over time.

Advantageously, an equipment according to the claimed invention comprises a device which is simple and easy to install even by unskilled personnel.

Advantageously, an equipment according to the claimed invention comprises a device which is perfectly in line with the safety requirements imposed by the sector regulations.

Advantageously, an equipment according to the claimed invention comprises a device that allows the integrity of the signals transmitted by the device to be preserved from interference and disturbances.

Advantageously, an equipment according to the claimed invention comprises a device that can be interrogated more frequently, thus allowing to identify with greater safety and timing any alarm situations related to certain meteorological conditions, such as the presence of rain, snow or strong wind, etc.

Advantageously, an equipment according to the claimed invention comprises a device which is an improvement and/or alternative to the traditional ones.

Advantageously, an equipment according to the claimed invention comprises a device which involves low installation costs.

Advantageously, an equipment according to the claimed invention comprises a device which can be obtained simply, quickly and with low costs.

Advantageously, an equipment according to the claimed invention comprises a device that is robust and resistant to atmospheric agents.

Advantageously, an equipment according to the claimed invention comprises a device that is easily configurable and intuitive to use.

Advantageously, an equipment according to the claimed invention comprises a device that can be used in home automation applications.

Advantageously, an equipment according to the claimed invention comprises a device that has limited energy consumption and high autonomy.

Advantageously, an equipment according to the claimed invention comprises a device that has a high durability.

Advantageously, an equipment according to the claimed invention comprises a device which allows to detect at the same time the temperature, the presence of rain, the presence and/or possibility of snow.

Another purpose of the invention is to propose an equipment for a roofing and/or closing installation, for example in pergolas, windows, skylights, doors and roofs in general, in which the closing movement can be controlled more reliably, prompt and precise in the presence of certain weather conditions, such as the presence of rain, snow or strong wind, etc.

### SUMMARY OF THE INVENTION

The above objectives are achieved, according to the invention, with an equipment as defined in claim 1.

### DESCRIPTION OF THE FIGURES

The present invention is further clarified hereinafter in some of its preferred embodiments, reported for purely illustrative and non-limiting purposes, with reference to the attached drawings, in which:

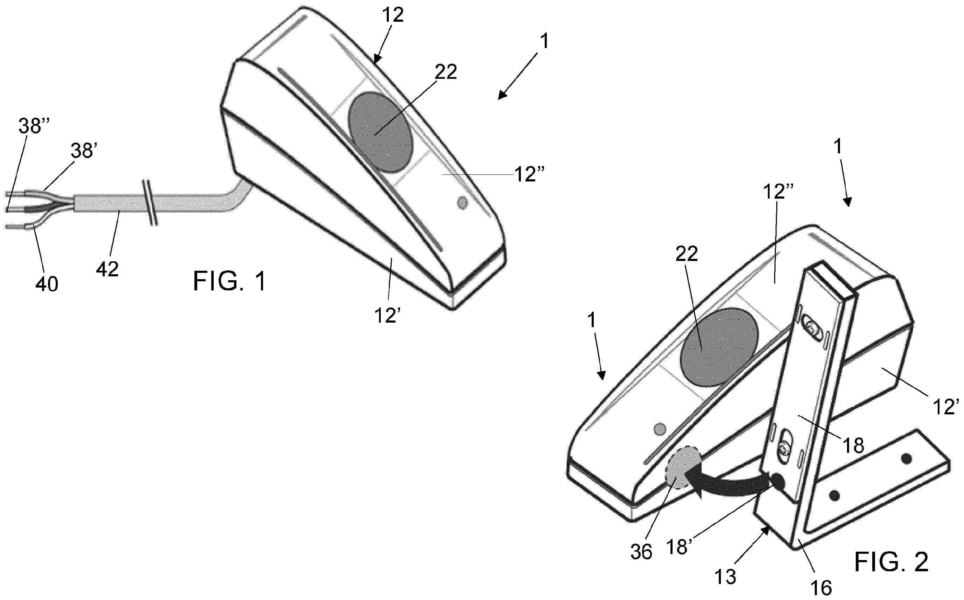

- Figure 1: shows a perspective view of a device according to the invention for detecting meteorological and/or environmental parameters;
- Figure 2: shows a perspective view of the device of Fig. 1 with its support element,

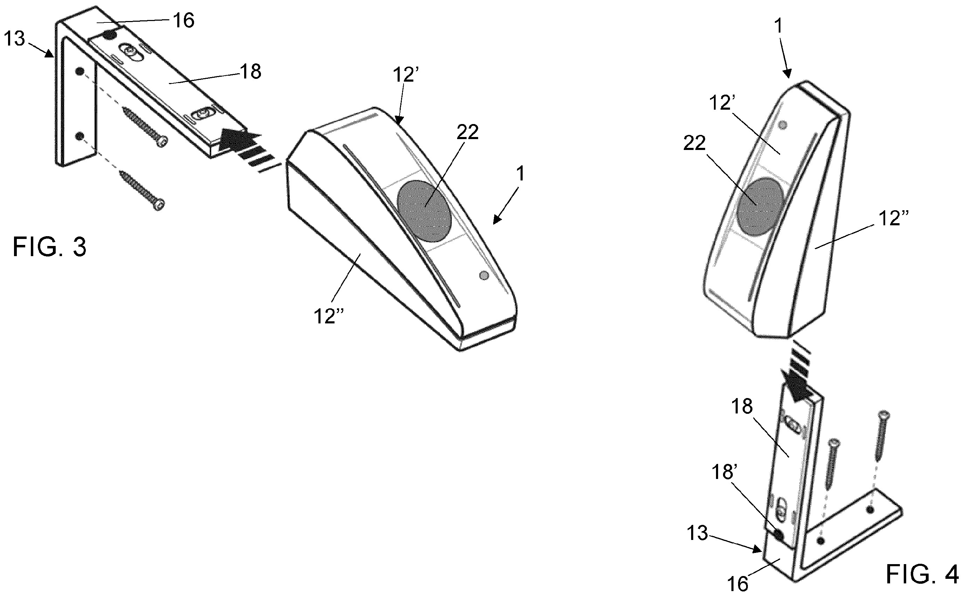

- Figure 3: shows a first installation method of the device of fig. 1 on its support element,
- Figure 4: shows a second and different installation method of the device of fig. 1 on its support element,

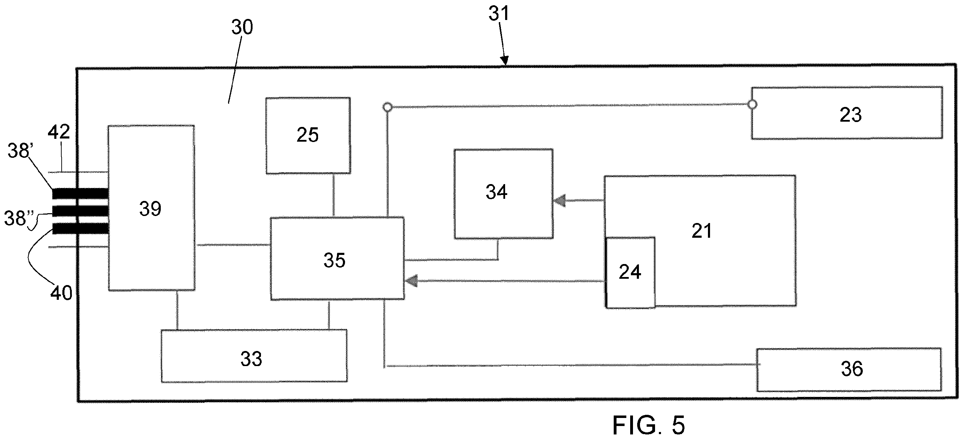

- Figure 5: shows in schematic view the components of the device according to the invention,
- Figure 6: shows in perspective view a further embodiment of the device according to the invention for detecting meteorological parameters and/or environmental.

### DETAILED DESCRIPTION OF THE INVENTION AND OF SOME OF ITS PREFERRED FORMS OF REALIZAZION

The device for detecting meteorological and/or environmental parameters, globally indicated with the reference number 1, can be applied/mounted in a roofing and/or closing installation, for example in pergolas, windows, skylights, doors and roofs in general.

Conveniently, for example, the device 1 is connected by wire to an external control unit and/or to a control unit for the moving devices of the installation covering elements, such as the actuators for moving the slats in the case of a pergola or the tree around which the cover sheet is wrapped or unrolled in the case of a roller awning. In particular, said movement devices comprise an electric motor to actuate the movement of the covering elements.

The device 1 comprises a housing structure, indicated as a whole with the reference number 12. Preferably, the housing structure 12 comprises two parts (for example a base part 12' and a cover part 12") which are removably joined between them mechanically, preferably sealed.

Conveniently, the device 1 according to the invention comprises a measuring and/or processing apparatus, indicated as a whole with the number 31, which is - at least in part - housed inside the housing structure 12.

Conveniently, said apparatus 31 can comprise at least one traditional electronic board 30.

Conveniently, said apparatus 31 comprises a control and/or processing unit 35. Preferably, said control and/or processing unit 35 comprises a microcontroller or a microprocessor which, preferably, is mounted on said electronic board 30. Advantageously, said apparatus 31 can comprise a memory unit.

Conveniently, said apparatus 31 also comprises at least one wireless transceiver 36 which, preferably, is mounted on the same electronic board 30 on which the microcontroller/microprocessor 35 is mounted. Conveniently, the transceiver 36 is connected to the control and/or processing unit 35 and/or it is integrated in said control and/or processing unit 35.

Preferably, the receiver is of the radio type. Conveniently, said wireless transceiver 36 is of the type suitable for receiving radio signals coming from outside the device 1 and also for wirelessly transmitting signals towards the outside of the device itself. Conveniently, the transceiver 36 can be configured for wireless data reception/transmission using Wi-Fi technology or on the basis of traditional standards, such as Bluetooth^{®} or ZigBee^{®}.

Conveniently, the device 1 can comprise a transceiver 36 which can be of the type suitable for receiving radio signals and a second wireless receiver which comprises a contact or proximity detection circuit with a magnetic element, as described in more detail below.

Preferably, said wireless transceiver 36 and/or said second wireless receiver can be powered or can be not powered, for example in the case of a contact or proximity detection circuit with a magnetic element.

Conveniently, the transceiver 36 - in addition to a receiver module - is advantageously provided with a transmitting module, preferably radio, to thus define said transceiver. Preferably, the transceiver is configured to operate in the ISM bands.

Conveniently, the apparatus 31 comprises a power supply unit 33 which supplies the electronic board 30 with the electrical power supply for the components of the apparatus 31. In particular, the power supply unit 33 is connected to the control unit and, the power supply unit 33 can also power the transceiver 36, if required.

Conveniently, the power supply unit 33 can comprise a DC-DC converter configured to supply voltage and current levels, and therefore power, suitable for the operation of the other components provided of the device 1.

The apparatus 31 also comprises an interface 39 for two electric power supply wires 38' and 38" and for a bidirectional data transmission wire 40.

Conveniently, the interface 39 is connected to the power supply unit 33, for thus transferring to this the electrical energy supplied by the two electric power supply wires 38' and 38", and is also connected to the control and/or processing unit 35, to thus transfer to this the data transmitted by means of the bidirectional data transmission wire 40.

In particular, the power supply unit 33 is configured to receive the electric power supply from the outside, preferably by means of two electric power supply wires 38' and 38" associated with an external electric source (not represented), preferably from the network. Preferably, the supply voltage is 24 Volts in direct current. More in detail, a first electric wire 38' is provided for the positive polarity in direct current, while the second electric wire 38" is provided for the negative polarity in direct current. Conveniently, the electrical wires 38' and 38" are configured to electrically connect the external electrical source to the power supply unit 33.

It is also provided that, alternatively, the power supply unit 33 can receive input - through the two wires 38' and 38" electrical power supply from one or more batteries (not shown) which, preferably, can be recharged with one or more external photovoltaic panels which, suitably, can be mounted on the roof installation and/or they can be external and independent from the latter.

The apparatus 31 also comprises a rain sensor 21, ie a sensor configured to detect the presence of rain. Conveniently, the rain sensor 21 can be of the conventional type and comprises a switching mechanism which is activated by the rain. The rain sensor 21 is electronically connected to the control and/or processing unit 35, to thus send corresponding signals in the event of rain.

Conveniently, the rain sensor 21 comprises a sensitive surface 22 which is configured to send a signal to the control and/or processing unit 35 if one or more drops of water are deposited on the sensitive surface itself. Conveniently, the sensitive surface 22 is mounted on the housing structure 12 so as to be exposed to the external environment. Preferably, said portion 22 is mounted on a front face of the covering part 12" of the housing structure 12.

Conveniently, the apparatus 31 is housed inside the housing structure 12, with the exception of the sensitive surface 22 which protrudes towards the exterior of said structure. Advantageously, the housing structure 12 is configured to guarantee the device 1 a degree of protection from external agents at least equal to IP 65.

The detection of the presence of water on the sensitive surface 22 can be carried out by making the sensitive surface itself with a hygroscopic material (i.e. a material configured to vary its dimensions as a result of water absorption) and coupling said surface 22 with a component configured to measure changes in the volume of the material with which the surface itself is made and convert them into electrical signals, for example a piezoelectric material. Alternatively, the detection of the presence of water can be carried out by making the sensitive surface 22 with a material transparent to electromagnetic radiation in a specific range of wavelengths and by positioning an electromagnetic absorption measurement system in an underlying position (ie facing the surface of the transparent material which is opposite to that which is destined to be hit by rain). The electromagnetic absorption measurement system can be configured to measure the reflectivity differences between when the sensitive surface 22 is dry and when the latter is wet. Alternatively, the rain sensor 21 can be a capacitive sensor, for example made with a plate made of ceramic material, for example alumina, inside which electroconductive portions are positioned and therefore measures a variation in the surface capacity of the sensitive surface 22.

Advantageously, the signal of the rain sensor 21 is transformed into a digital signal and processed by the control and/or processing unit 35. Conveniently, the control and/or processing unit 35 can be configured to emit an alarm signal when the value read by the rain sensor 21 is above (or below) a predefined value. Conveniently, the rain sensor 21 can be configured to have different sensitivities. Conveniently, the different sensitivities can correspond to different predefined values above (or below) which the control and/or processing unit 35 can emit the alarm signal. Conveniently, the alarm signal can be generated only after a predefined number of measurements, preferably consecutive, or in any case included in a determined time interval, are above (or below) said predefined value. Preferably said time interval is 3 seconds.

The apparatus 31 also comprises a (first) temperature sensor 23 for detecting the temperature of the external environment. Conveniently, the temperature sensor 23 is electronically connected to the control and/or processing unit 35 to thus transfer to the latter a signal representative of the readings made.

The apparatus 31 also comprises a further/second temperature sensor 24 for detecting the temperature at the rain sensor 21. Conveniently, for this purpose, said further temperature sensor 24 is mounted/installed on or at the rain sensor 21. Conveniently, the further/second temperature sensor 24 is electronically connected to the control and/or processing unit 35 to thus transfer to the latter a signal representative of the readings made.

Conveniently, the first 23 and/or the further/second temperature sensor 24 can be of any type, for example a thermistor, or a thermocouple, or a thermal expansion meter or other. Conveniently, the first 23 and/or the second temperature sensor 24 is configured to transform a temperature variation into a variation of a suitable electrical signal, for example temperature and/or voltage.

Preferably, the apparatus 31 can also comprise a unit 34 for controlling the rain sensor 21, in particular for controlling the temperature of the sensitive portion 22 which is exposed to the external environment. Conveniently, this unit 34 can be external and separate from the control and/or processing unit 35 or it can be integrated in the latter. The unit 34 for controlling the rain sensor 21 is electronically integrated in and/or connected to the control and/or processing unit 35 to thus transfer to the latter signals representative of the readings made by the rain sensor 21.

Advantageously, the device 1 can also comprise a heater (not shown), preferably electric, in order to keep the components of the apparatus 31 - and in particular of the rain sensor 21 - at temperatures which guarantee their operation.

Conveniently, the heater can be connected to the unit 34. Conveniently, the operation of the heater can be controlled by the unit 34 according to the information received from the rain sensor 21 and/or from the first 23 and/or from the second temperature sensor 24. Conveniently, for example, the heater can activate automatically when the temperature measured by the first sensor 23 falls below a certain predefined value, for example 4°C or and/or additionally it can activate itself if the rain sensor 21 detects the presence of rain. Alternatively, the heater can always be active. Advantageously, the heater can be controlled by sending current, and preferably a current of the PWM type (ie "pulse width modulation"). Advantageously, the unit 34 can be configured to activate the heater so as to maintain the sensitive surface 22 of the rain sensor 21 at a temperature (detected by the second sensor 24) which is constant and/or higher than a predefined value, preferably at above 40°C.

Conveniently, the control unit 34 of the rain sensor 21 and/or the control and/or processing unit 35 can be configured to combine the information detected by the rain sensor 21 and the first temperature sensor 23 so as to be able to launch a snow alarm when said rain sensor 21 detects the presence of water, and furthermore when said first sensor 23 measures a temperature of the external environment which is lower than a predefined value, for example 4°C.

Conveniently, the apparatus 31 also comprises a visual indicator 25, preferably luminous, which is electronically connected to the control and/or processing unit 35 to indicate the correct operation of the device and/or to guide the user during its programming.

Preferably, the visual indicator 25 comprises at least one lighting element, for example one or more LEDs configured to send the user information concerning the operation of the device in a simple and intuitive manner. For example, the visual indicator 25 may comprise an LED configured to emit light according to different sequences (for example fixed light, flashing light with different periods, light of different colors...).

Conveniently, the visual indicator 25 can be configured to emit light according to different sequences following and/or during the calibration or configuration operations of the device 1.

Conveniently, the visual indicator 25 is mounted on the housing structure 12 so as to be visible from the outside of the structure itself. Preferably, the visual indicator 25 can be mounted on a front face of the covering part 12" of the housing structure 12, but it could also be mounted on a side face of the base part 12'.

Alternatively and/or in addition to the visual indicator 25, the device 1 can comprise a buzzer (not shown), which allows to emit appropriate sound signals following the configuration and/or activation of the device 1 and/or the emission of an alarm signal.

Advantageously, the device 1 can be installed/mounted on a support element 13 which preferably comprises a bracket 16. For example, the bracket can be substantially L-shaped with the two portions defining an angle between them that is less than 90 °.

Conveniently, the support element 13 allows the device 1 to be mounted on an installation (not shown in the drawings), preferably a wall, or a roofing installation, in particular a pergola or awning. Conveniently, the device 1 can be installed on a bracket 16 in a simply removable way, for example it can be inserted into said bracket. Conveniently, the device 1 can be associated with the bracket 16 by means of mechanical fastening means, for example by mechanical interlocking or by means of traditional fastening members (for example screws).

Conveniently, the device 1 can be mounted in a hinged way (ie in such a way as to be able to rotate) on a support element 13 which is intended to be fixed on an installation.

Advantageously, on the surface of said bracket 16 there may be a programming module 18 which allows to configure the operation of the device 1. For example, the programming module 18 can comprise a magnet 18' configured to cooperate with a corresponding circuit provided in the second receiver wireless present in the device 1. Advantageously when the device 1 is inserted in the bracket 16, or in any case it is approached to the latter, the circuit of the second wireless receiver present inside the device 1 passes in front of the magnet 18' present on the bracket 16, and the electromagnetic induction causes a passage of current inside the circuit of the second wireless receiver which is detected for example by the control and/or processing unit 35 which is suitably connected to the circuit of the second receiver.

Conveniently in this way it is possible to record the position of the circuit of the second wireless receiver with respect to the magnet 18' of the programming module 18 mounted on the support element 13.

Advantageously, the control and/or processing unit 35 is configured to detect the number of consecutive passages of the circuit of the second wireless receiver in proximity and/or contact with respect to the magnet 18' and/or their duration, so as to activate and set the desired functions of said device 1.

Furthermore, advantageously, on the device 1 at least one button (not shown) must be provided, in order to allow the user to interact with the device itself.

Conveniently, for example, by means of suitable combinations of approaching the device 1 (and in particular of the second wireless receiver) to said magnet 18 and pressing one or more appropriate buttons, it is possible to activate and/or deactivate the heater, and/or modify the sensitivity. of the rain sensor 21 and/or of the temperature sensors 23 and/or 24, and/or switch on and/or activate and/or switch off the device 1, and/or activate one or more communication channels of the transceiver 36 with a unit external wireless transmission, such as a smartphone or tablet, or in general it is possible to perform other operations on the device itself.

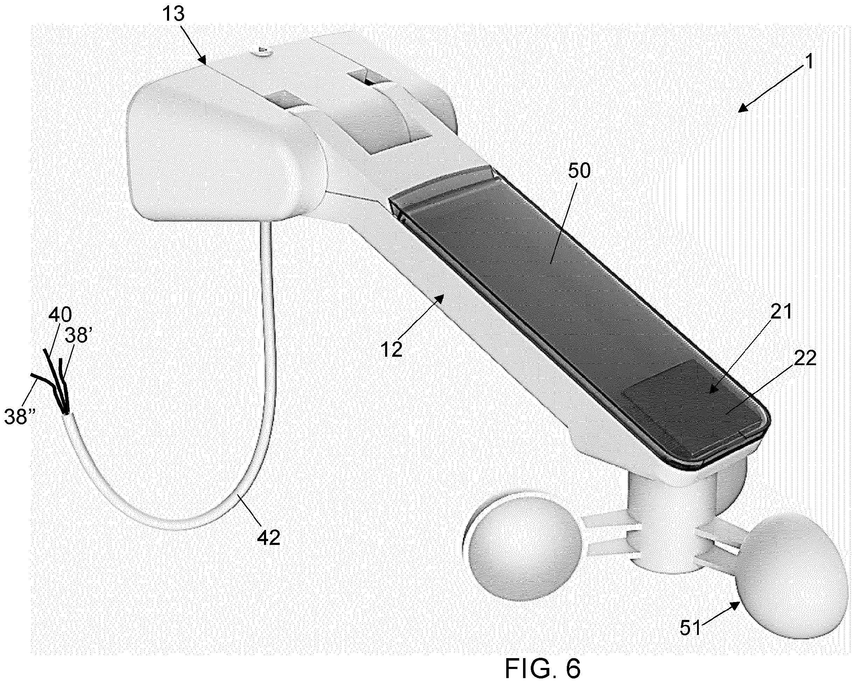

Conveniently, as shown in Figure 6, the device 1 can also comprise other traditional sensors for measuring other meteorological and/or environmental parameters, such as for example a solarimeter 50 to measure solar radiation and/or a humidity sensor and/or a sensor 51 (for example an anemometer) for measuring wind speed or pressure, and/or in general other sensors to measure other meteorological and/or environmental parameters. Conveniently, for example, the device 1 can detect the presence of rain, snow, temperature, solar radiation and wind.

As mentioned, the device 1 also comprises a bidirectional data transmission wire 40 with a control unit external to the device 1. Preferably, the device 1 comprises exclusively three wires and, in particular, the two power supply wires 38' and 38", and the bidirectional data transmission wire 40.

Conveniently, the bidirectional data transmission wire 40 can be connected to an external control unit for the motorization means of the installation or, optionally, it can be connected directly to the control units integrated on board said motorization means.

Preferably, the bidirectional data transmission wire 40 is connected to the control and/or processing unit 35 of the device 1 through the interface 39 of the device itself.

Advantageously, said three wires 38', 38" and 40 are gathered inside a single cable 42. Alternatively, in a possible embodiment not shown here, while the two electric supply wires 38', 38" can be gathered/housed within a first cable, the bidirectional data transmission wire 40 can be housed within a second dedicated cable, which is separate from the first cable.

Conveniently, the three wires 38', 38" and 40 - preferably gathered in a single cable 42 - have a first end (internal end) connected to the interface 39 housed inside the housing structure 12 and then protrude from the latter.

Conveniently, the bidirectional data transmission wire 40 which emerges from the housing structure 12 of the device 1 can be connected at the other end (external end) to an interface external to said device 1, preferably to an output interface in which other connections come together via cable, or which is connected to a home automation system. Conveniently, the bidirectional data transmission wire 40 can be connected to an output interface comprising a unit or a diagnostic tool of the device 1.

Conveniently, the bidirectional data transmission wire 40 which protrudes from the housing structure 12 of the device 1 it can be connected to at least one further (second) device which comprises an engine and/or its control unit.

Advantageously, again through the bidirectional data transmission wire 40, the control and/or processing unit 35 of the device 1 sends to the control unit of a second device, for example equipped with a motor, the signals relating to the readings made by the sensors provided in device 1, or of the alarm signals deriving from said detections.

Preferably, the transceiver 36 is connected via wireless with the outside to receive command signals from the outside to control, on the basis of these, the device 1 or another external device which is connected by means of the bidirectional transmission wire 40 to said device 1 and which is not equipped with a receiver. Conveniently, through the transceiver 36 the control and/or processing unit 35 of the device 1 can receive from an external transmitter, and in particular from a remote control or even from a mobile phone (preferably a smartphone) or from other traditional wireless devices in general, command signals for the device itself and/or for other devices which are connected to said device 1 by means of the bidirectional data transmission wire 40.

In particular, the device 1 acts as a separate unit for wireless communications via radio with a control unit which is external to the device 1 and is connected to the latter by means of the bidirectional data transmission wire 40. Basically, a control unit that is external to the device 1 can be put into communication via wireless with another external device (only or also) through device 1.

Conveniently, for the detection of meteorological and/or environmental parameters, device 1 is positioned outside the metal structures and this is particularly advantageous since the radio transceivers through the transceiver 36 of the device itself are not shielded, unlike the direct radio communications with the external control unit which instead are shielded since said control unit is generally housed inside suitable metal structures.

Advantageously, moreover, through the device 1 - which is equipped with a transceiver 36 for wireless communications with the outside and which is also provided with the bidirectional data transmission wire 40 with the control unit - it is possible to request from the outside via wireless to the control unit (through the combined action first of the transceiver 36 and then of the bidirectional data transmission wire 40 of the device 1) information on the status of the control unit itself, to then always transmit it via wireless to the outside (through the combined action before the transmission wire bidirectional data 40 and then of the transceiver 36 of the device 1), as well as it is possible to send setting or command signals from the outside to the control unit.

Advantageously, moreover, through the device 1 - which is equipped with a transceiver 36 for wireless communications with the outside world and which is also equipped with the bidirectional data transmission wire 40 with the control unit - it is possible to send both by wire and wirelessly the signals relating to the detections carried out by the sensors provided in the device 1, or to the alarm signals deriving from said detections. In particular, these signals relating to the detections carried out by the sensors and/or the alarm signals deriving from said detections can be sent through the wire 40 to the control unit and/or can be sent wirelessly through the transceiver 36 to further external units.

Conveniently, the external control unit can also receive various signals (command, detection and/or alarms) from other external units which are then sent through wire 40 to the control and/or processing unit 35 of the device 1, to be then retransmitted. to further external units through the transceiver 36 with which the device 1 is provided.

Advantageously, the device 1 can be connected via the bidirectional data transmission wire 40 to a centralized or distributed home automation unit which is configured to receive signals relating to the measurements made from the sensors provided in the device 1, or the alarm signals deriving from said detections, and then send them, preferably via Wi-Fi and Internet protocols, to an external portable device and/or to a cloud archive accessible from the external portable device, as well as allowing the operation of the device 1 itself to be monitored.

Conveniently, the present invention also relates to an equipment which comprises a device 1, as described above, and a second device (preferably but not necessarily provided with a motor) which is provided with its own control unit. Furthermore, suitably, the control and/or processing unit 35 of the first device 1 is connected and communicates with the control unit of the second device by means of the bidirectional data transmission wire 40 which protrudes from the housing structure 12 of the first device.

Conveniently, the present invention also relates to an equipment which comprises a device 1, as described above, and an external interface (preferably but not necessarily defined by a home automation unit) which is provided with its own control unit. Furthermore, suitably, the control and/or processing unit 35 of the first device 1 is connected and communicates with the control unit of the external interface by means of the bidirectional data transmission wire 40 which emerges from the housing structure 12 of the first device.

Conveniently, the equipment can comprise an external transmitter which is configured to communicate via wireless with the transceiver 36 with which device 1 is provided.

Conveniently, the control unit of the second device and/or of the external interface is connected via wireless and/or via wire with at least one first external unit, to thus receive from the latter at least a signal to be sent then from the control unit, through said bidirectional data transmission wire 40, to said device 1 which then retransmits them, through the transceiver 36 of which the device 1 is provided with at least one second external unit.

Advantageously, when the device 1 is associated with a second device, the power supply wires 38' and 38" split and, suitably, connect the external power source in parallel to the respective control units of said devices.

Conveniently, the bidirectional data transmission wire 40 precisely allows data transmission from the control and/or processing unit 35 of the device 1 to the control unit of the second device, and/or vice versa.

Advantageously, the control signals for the second device are sent, by means of the bidirectional data transmission wire 40, from the control and/or processing unit 35 of the device 1 to the control unit of the second device. In essence, therefore, the control unit of the second device - having no receiver - receives the command signals only by means of the bidirectional data transmission wire 40.

Advantageously, the setting and setting of the control unit of the second device is carried out by sending corresponding signals via wireless to the transceiver 36 provided in the device 1 and, suitably, these signals are then transmitted by the control and/or processing unit 35 of the device 1 to the control unit of the second device by means of the bidirectional data transmission wire 40.

Basically, the bidirectional data transmission wire 40 defines a communication channel (bus) on a wire between the control and/or processing unit 35 of the device 1 and the control unit of a second device. Preferably, said bidirectional data transmission wire 40, with its interface module 39, define an alternating bidirectional (half-duplex) communication channel between the control and/or processing unit 35 of the first device 1 and the control unit of a second device. Conveniently, the control and/or processing unit 35 and the control unit of the second device are configured so that the data communication protocol through the wire 40 also includes a cyclic redundancy check (CRC) for verifying the integrity of the transmitted data, and in particular to identify any random transmission errors due to interference, line noise and distortions.

From what has been said it is clear that the device according to the invention is particularly advantageous in that:
- it has a particularly compact design, while integrating a plurality of sensors inside;
- is quick and easy to install,
- it can be easily and easily controlled and set from the outside,
- it can be used both individually and in combination with another device,
- being always powered thanks to the two wires 38' and 38", it allows a more frequent interrogation of the status of the sensors, and therefore a more frequent transmission of the signals detected by the sensors and/or the alarm signals deriving from such detections,
- remaining always connected by means of the bidirectional data transmission wire 40, it allows its operational status to be monitored more frequently from the outside so that, in the event of no response or in the presence of an error signal, a warning signal representative of such situation,
- the presence of a bidirectional data transmission wire 40 allows a more secure transmission, with lower risks of disturbances and external interference and also at long distances of the signals relating to the detections carried out by the sensors provided in the device and/or of the alarm signals deriving from said surveys.

The device which is part of the equipment according to the present invention has been described here in particular with reference to its application in a pergola, however it is understood that it can be used in any roofing and/or closing installation, such as for example windows or skylights.

Unlike EP2426518 and US2010/0271216, the device which is part of the equipment according to the present invention at the same time comprises both a wireless transceiver, preferably operating via radio, and a bidirectional data transmission wire with an external control unit, to thus allow bidirectional communication with the outside both via wireless and via wire; this is particularly advantageous as it allows to use the device which - in order to be able to detect meteorological and/or environmental parameters, is installed outside metal structures (and therefore wireless communication via radio is not shielded by said structures) - such as separate unit for the bidirectional communication of data (both signals and commands) in a safe way, and in the case also additional/redundant and/or back-up, to/from an external control unit (which instead - being housed inside of metal structures - it suffers from radio shielding problems in case of wireless communication via direct radio) and also allows the device to be used as a bridge for the transmission of data (both signals and commands) from the control unit to further external units, and/or viceversa.

## Claims

1. Equipment for the control and/or movement of a covering and/or closing installation, comprising:
a first device (1) for the detection of meteorological and/or environmental parameters, to be mounted on or in correspondence with a covering and/or closure installation, comprising:
- a housing structure (12) in which a measurement and/or processing apparatus (31) is housed and/or mounted, comprising at least one sensor for detecting a meteorological and/or environmental parameter and in which at least one control and/or processing unit (35) which is connected with said at least one sensor to receive and/or process signals relating to the detections carried out by said at least one sensor and/or alarm signals deriving from said detections,
- electrical power supply wires (38', 38") for the components of said device (1), said electrical supply wires emerging from said housing structure (12) to be connected with a power source which is external to said structure housing (12),
- a wireless transceiver (36) which is electronically connected to and/or integrated in the control and/or processing unit (35), to wirelessly receive signals from the outside of said device (1) and also to wirelessly transmit signals towards the outside the device itself,
- at least a second device with its own control unit or at least one external interface, preferably a centralized home automation unit, equipped with a control unit,
**characterized in that** the first device (1) comprises:
- a bidirectional data transmission wire (40) which at one end is connected to said control and/or processing unit (35), provided inside said housing structure (12), and which at the other end, coming out from said housing structure (12), it is configured to be connected and in bidirectional communication:
- with the control unit of said second device, wherein the control and/or processing unit (35) of said first device (1) is connected and communicates bidirectionally with the control unit of said second device exclusively or also by means of said bidirectional data transmission wire (40), and/or
- with the control unit of said external interface.

2. Equipment according to claim 1, **characterized in that** said apparatus (31) of the first device (1) also comprises:
- a power supply unit (33) for supplying electrical power to the components of the apparatus (31),
- an interface (39) for said two electric power supply wires (38', 38") and for said bidirectional data transmission wire (40),
and by the fact that the interface (39) is connected with the power supply (33), to thus transfer to this the electrical energy supplied by the two electrical supply wires (38', 38"), and is also connected to the control and/or processing unit (35), to thus transfer to this the data transmitted through the bidirectional data transmission wire (40).

3. Equipment according to one or more of the preceding claims, **characterized in that** said bidirectional data transmission wire (40) and said power supply wires (38', 38") are gathered within a single cable (42) which protrudes from the housing structure (12).

4. Equipment according to one or more of the preceding claims, **characterized in that** said at least one sensor for detecting a meteorological and/or environmental parameter of said apparatus (31) comprises:
- at least one rain sensor (21),
- at least a first temperature sensor (23) for detecting the temperature of the external environment.

5. Equipment according to one or more of the preceding claims, **characterized in that** said at least one sensor for detecting a meteorological and/or environmental parameter of said apparatus (31) comprises at least one rain sensor (21) comprising a sensitive surface (22) which is configured to send a signal to the control and/or processing unit (35) if one or more drops of water are deposited on the sensitive surface itself.

6. Equipment according to one or more of the preceding claims, **characterized in that** said apparatus (31) of the first device (1) comprises a further/second temperature sensor (24) for detecting the temperature at the rain sensor (21).

7. Equipment according to one or more of the preceding claims, **characterized in that** said apparatus (31) of the first device (1) also comprises a unit (34) for controlling the rain sensor (21), in particular for controlling the temperature of the sensitive portion (22) which is exposed to the external environment.

8. Equipment according to one or more of the preceding claims, **characterized in that** the first device (1) comprises a heater, preferably electric, for keeping the components of the apparatus (31), and in particular of the rain sensor (21), at temperatures that guarantee its operation.

9. Equipment according to one or more of the preceding claims, **characterized in that** said bidirectional data transmission wire (40) defines a communication channel towards the outside of the first device itself of the alternating bidirectional type and in which a cyclic redundancy check is implemented (CRC).

10. Equipment according to one or more of the preceding claims, **characterized in that** the first device (1) also comprises a second wireless receiver comprising a contact or proximity detection circuit with a magnetic element.

11. Equipment according to one or more of the preceding claims, **characterized in that** said second device comprises a motor.

12. Equipment according to one or more of the preceding claims, **characterized in that** it comprises an external transmitter which is configured to communicate via wireless with the transceiver (36) with which the first device (1) is provided.

13. Equipment according to one or more of the preceding claims, **characterized in** the fact that said control unit of the second device and/or of the external interface is connected via wireless and/or via wire with at least one first external unit, to thus allow said control unit of the second device and/or of the external interface to receive at least one signal to be transmitted through said bidirectional data transmission wire (40) to said first device (1) which then retransmits them, through the transceiver (36) of which said first device (1) is equipped with at least one second outdoor unit.

## Patentansprüche

1. Ausrüstung für die Steuerung und/oder Bewegung einer Abdeck- und/oder Verschließeinrichtung, umfassend:
- eine erste Vorrichtung (1) zum Erfassen von meteorologischen und/oder Umweltparametern, die auf oder in Übereinstimmung mit einer Abdeck- und/oder Verschließeinrichtung zu montieren ist, umfassend:
- eine Gehäusestruktur (12), in der eine Mess- und/oder Verarbeitungsvorrichtung (31) untergebracht und/oder montiert ist, die mindestens einen Sensor zum Erfassen eines meteorologischen und/oder Umweltparameters umfasst, und in der mindestens eine Steuer- und/oder Verarbeitungseinheit (35), die mit dem mindestens einen Sensor verbunden ist, um Signale, die sich auf die von dem mindestens einen Sensor durchgeführten Erfassungen beziehen, und/oder Alarmsignale, die sich von den Erfassungen ableiten, zu empfangen und/oder zu verarbeiten,
- elektrische Stromversorgungsdrähte (38', 38") für die Komponenten der Vorrichtung (1), wobei die Stromversorgungsdrähte aus der Gehäusestruktur (12) austreten, um mit einer Stromquelle verbunden zu werden, die sich außerhalb der Gehäusestruktur (12) befindet,
- einen drahtlosen Transceiver (36), der elektronisch mit der Steuer- und/oder Verarbeitungseinheit (35) verbunden und/oder in diese integriert ist, um drahtlos Signale von außerhalb der Vorrichtung (1) zu empfangen und auch drahtlos Signale nach außerhalb der Vorrichtung zu senden,
- mindestens eine zweite Vorrichtung mit eigener Steuereinheit oder mindestens einer externen Schnittstelle, vorzugsweise eine zentrale Hausautomatisierungseinheit, die mit einer Steuereinheit ausgestattet ist,
**dadurch gekennzeichnet, dass** die erste Vorrichtung (1) umfasst:
- ein bidirektionaler Datenübertragungsdraht (40), der an einem Ende mit der Steuer- und/oder Verarbeitungseinheit (35) verbunden ist, die im Inneren der Gehäusestruktur (12) vorgesehen ist, und der am anderen Ende, das aus der Gehäusestruktur (12) herauskommt, konfiguriert ist, um verbunden zu werden und in bidirektionaler Kommunikation zu stehen:
- mit der Steuereinheit der zweiten Vorrichtung, wobei die Steuer- und/oder Verarbeitungseinheit (35) der ersten Vorrichtung (1) ausschließlich oder auch mittels des bidirektionalen Datenübertragungsdrahtes (40) mit der Steuereinheit der zweiten Vorrichtung verbunden ist und bidirektional kommuniziert, und/oder
- mit der Steuereinheit der externen Schnittstelle.

2. Ausrüstung nach Anspruch 1, **dadurch gekennzeichnet, dass** die Vorrichtung (31) der ersten Vorrichtung (1) auch umfasst:
- eine Stromversorgungseinheit (33) zur Versorgung der Komponenten der Vorrichtung (31) mit elektrischer Energie,
- eine Schnittstelle (39) für die beiden elektrischen Stromversorgungsdrähte (38', 38") und für den bidirektionalen Datenübertragungsdraht (40),
und dadurch, dass die Schnittstelle (39) mit der Stromversorgung (33) verbunden ist, um auf diese Weise die von den beiden elektrischen Stromversorgungsdrähten (38', 38") gelieferte elektrische Energie zu übertragen, und auch mit der Steuer- und/oder Verarbeitungseinheit (35) verbunden ist, um auf diese Weise die über den bidirektionalen Datenübertragungsdraht (40) übertragenen Daten zu übertragen.

3. Ausrüstung nach einem oder mehreren der vorstehenden Ansprüche, **dadurch gekennzeichnet, dass** der Datenübertragungsdraht (40) und die elektrischen Stromversorgungsdrähte (38', 38") in einem einzigen Kabel (42) zusammengefasst sind, das aus der Gehäusestruktur (12) herausragt.

4. Ausrüstung nach einem oder mehreren der vorstehenden Ansprüche, **dadurch gekennzeichnet, dass** der mindestens eine Sensor zum Erfassen eines meteorologischen und/oder Umweltparameters der Vorrichtung (31) umfasst:
- mindestens einen Regensensor (21),
- mindestens einen ersten Temperatursensor (23) zum Erfassen der Temperatur der äußeren Umgebung.

5. Ausrüstung nach einem oder mehreren der vorstehenden Ansprüche, **dadurch gekennzeichnet, dass** der mindestens eine Sensor zum Erfassen eines meteorologischen und/oder Umweltparameters der Vorrichtung (31) mindestens einen Regensensor (21) umfasst, der eine empfindliche Oberfläche (22) umfasst, die so konfiguriert ist, dass sie ein Signal an die Steuer- und/oder Verarbeitungseinheit (35) sendet, wenn sich ein oder mehrere Wassertropfen auf der empfindlichen Oberfläche absetzen.

6. Ausrüstung nach einem oder mehreren der vorstehenden Ansprüche, **dadurch gekennzeichnet, dass** die Vorrichtung (31) der ersten Vorrichtung (1) einen weiteren/zweiten Temperatursensor (24) zum Erfassen der Temperatur am Regensensor (21) umfasst.

7. Ausrüstung nach einem oder mehreren der vorstehenden Ansprüche, **dadurch gekennzeichnet, dass** die Vorrichtung (31) der ersten Vorrichtung (1) auch eine Einheit (34) zum Steuern des Regensensors (21) umfasst, insbesondere zum Steuern der Temperatur des empfindlichen Abschnitts (22), der der äußeren Umgebung ausgesetzt ist.

8. Ausrüstung nach einem oder mehreren der vorstehenden Ansprüche, **dadurch gekennzeichnet, dass** die erste Vorrichtung (1) eine, vorzugsweise elektrische, Heizung umfasst, um die Komponenten der Vorrichtung (31), insbesondere des Regensensors (21), auf Temperaturen zu halten, die ihren Betrieb gewährleisten.

9. Ausrüstung nach einem oder mehreren der vorstehenden Ansprüche, **dadurch gekennzeichnet, dass** der bidirektionale Datenübertragungsdraht (40) einen Kommunikationskanal nach außerhalb der ersten Vorrichtung vom alternierenden bidirektionalen Typ definiert, in dem eine zyklische Redundanzprüfung implementiert ist (CRC).

10. Ausrüstung nach einem oder mehreren der vorstehenden Ansprüche, **dadurch gekennzeichnet, dass** die erste Vorrichtung (1) auch einen zweiten drahtlosen Empfänger umfasst, der eine Kontakt- oder Näherungserfassungsschaltung mit einem magnetischen Element umfasst.

11. Ausrüstung nach einem oder mehreren der vorstehenden Ansprüche, **dadurch gekennzeichnet, dass** die zweite Vorrichtung einen Motor umfasst.

12. Ausrüstung nach einem oder mehreren der vorstehenden Ansprüche, **dadurch gekennzeichnet, dass** sie einen externen Sender umfasst, der so konfiguriert ist, dass er drahtlos mit dem Transceiver (36) kommuniziert, mit dem die erste Vorrichtung (1) versehen ist.

13. Ausrüstung nach einem oder mehreren der vorstehenden Ansprüche, **dadurch gekennzeichnet, dass** die Steuereinheit der zweiten Vorrichtung und/oder der externen Schnittstelle drahtlos und/oder drahtgebunden mit mindestens einer ersten externen Einheit verbunden ist, um so der Steuereinheit der zweiten Vorrichtung und/oder der externen Schnittstelle zu ermöglichen, mindestens ein Signal zu empfangen, das über den bidirektionalen Datenübertragungsdraht (40) an die erste Vorrichtung (1) übertragen werden soll, die sie dann über den Transeiver (36), mit dem die erste Vorrichtung (1) mit mindestens einer zweiten Außeneinheit ausgestattet ist, zurücksendet.

## Revendications

1. Équipement pour la commande et/ou le déplacement d'une installation de couverture et/ou de fermeture, comprenant :
- un premier dispositif (1) pour la détection de paramètres météorologiques et/ou environnementaux, à monter sur ou en correspondance avec une installation de couverture et/ou de fermeture, comprenant :
- une structure de logement (12) dans laquelle est logé et/ou monté un appareil de mesure et/ou de traitement (31) comprenant au moins un capteur pour la détection d'un paramètre météorologique et/ou environnemental et dans laquelle se trouve au moins une unité de commande et/ou de traitement (35) qui est reliée audit au moins un capteur pour recevoir et/ou traiter des signaux relatifs aux détections effectuées par ledit au moins un capteur et/ou des signaux d'alarme découlant desdites détections,
- des fils d'alimentation électrique (38', 38") pour les composants dudit dispositif (1), lesdits fils d'alimentation électrique sortant de ladite structure de logement (12) pour être reliés à une source d'alimentation externe à ladite structure de logement (12),
- un émetteur-récepteur sans fil (36) relié électroniquement et/ou intégré à l'unité de commande et/ou de traitement (35), pour recevoir sans fil des signaux de l'externe dudit dispositif (1) et également pour transmettre sans fil des signaux vers l'extérieur du dispositif lui-même,
- au moins un second dispositif doté de sa propre unité de commande ou au moins une interface externe, de préférence une unité domotique centralisée, équipée d'une unité de commande,
**caractérisé en ce que** le premier dispositif (1) comprend :
- un fil de transmission de données bidirectionnel (40) qui, à une extrémité, est relié à ladite unité de commande et/ou de traitement (35), prévue à l'intérieur de ladite structure de logement (12), et qui, à l'autre extrémité, sortant de ladite structure de logement (12), est configuré pour être relié et en communication bidirectionnelle :
- avec l'unité de commande dudit second dispositif, l'unité de commande et/ou de traitement (35) dudit premier dispositif (1) étant reliée et communiquant de manière bidirectionnelle avec l'unité de commande dudit second dispositif exclusivement ou également au moyen dudit fil de transmission de données bidirectionnel (40), et/ou
- avec l'unité de commande de ladite interface externe.

2. Équipement selon la revendication 1, **caractérisé en ce que** ledit appareil (31) du premier dispositif (1) comprend également :
- une unité d'alimentation (33) pour fournir de l'énergie électrique aux composants de l'appareil (31),
- une interface (39) pour lesdits deux fils d'alimentation électrique (38', 38") et pour ledit fil de transmission de données bidirectionnel (40),
et par le fait que l'interface (39) est reliée à l'alimentation électrique (33), pour lui transférer ainsi l'énergie électrique fournie par les deux fils d'alimentation électrique (38', 38"), et est également reliée à l'unité de commande et/ou de traitement (35), pour lui transférer ainsi les données transmises par le fil de transmission de données bidirectionnel (40).

3. Équipement selon une ou plusieurs des revendications précédentes, **caractérisé en ce que** ledit fil de transmission de données bidirectionnel (40) et lesdits fils d'alimentation (38', 38") sont rassemblés dans un seul câble (42) qui fait saillie de la structure de logement (12).

4. Équipement selon une ou plusieurs des revendications précédentes, **caractérisé en ce que** ledit au moins un capteur pour la détection d'un paramètre météorologique et/ou environnemental dudit appareil (31) comprend :
- au moins un capteur de pluie (21),
- au moins un premier capteur de température (23) pour détecter la température de l'environnement externe.

5. Équipement selon une ou plusieurs des revendications précédentes, **caractérisé en ce que** ledit au moins un capteur de détection d'un paramètre météorologique et/ou environnemental dudit appareil (31) comprend au moins un capteur de pluie (21) comportant une surface sensible (22) configurée pour envoyer un signal à l'unité de commande et/ou de traitement (35) si une ou plusieurs gouttes d'eau se déposent sur la surface sensible elle-même.

6. Équipement selon une ou plusieurs des revendications précédentes, **caractérisé en ce que** ledit appareil (31) du premier dispositif (1) comprend un autre/second capteur de température (24) pour détecter la température au niveau du capteur de pluie (21).

7. Équipement selon une ou plusieurs des revendications précédentes, **caractérisé en ce que** ledit appareil (31) du premier dispositif (1) comprend également une unité (34) de commande du capteur de pluie (21), notamment de commande de la température de la partie sensible (22) qui est exposée à l'environnement externe.

8. Équipement selon une ou plusieurs des revendications précédentes, **caractérisé en ce que** le premier dispositif (1) comprend un chauffage, de préférence électrique, pour maintenir les composants de l'appareil (31), et en particulier du capteur de pluie (21), à des températures qui garantissent son fonctionnement.

9. Équipement selon une ou plusieurs des revendications précédentes, **caractérisé en ce que** ledit fil de transmission de données bidirectionnel (40) définit un canal de communication vers l'extérieur du premier dispositif lui-même de type bidirectionnel alterné et dans lequel un contrôle de redondance cyclique est implémenté (CRC).

10. Équipement selon une ou plusieurs des revendications précédentes, **caractérisé en ce que** le premier dispositif (1) comprend également un second récepteur sans fil comprenant un circuit de détection de contact ou de proximité avec un élément magnétique.

11. Équipement selon l'une ou plusieurs des revendications précédentes, **caractérisé en ce que** le second dispositif comprend un moteur.

12. Équipement selon une ou plusieurs des revendications précédentes, **caractérisé en ce qu'**il comprend un émetteur externe configuré pour communiquer sans fil avec l'émetteur-récepteur (36) dont est équipé le premier dispositif (1).

13. Équipement selon une ou plusieurs des revendications précédentes, **caractérisé en ce que** ladite unité de commande du second dispositif et/ou de l'interface externe est reliée sans fil et/ou avec fil avec au moins une première unité externe, pour permettre ainsi à ladite unité de commande du second dispositif et/ou de l'interface externe de recevoir au moins un signal à transmettre via ledit fil de transmission de données bidirectionnel (40) audit premier dispositif (1) qui les retransmet ensuite, via l'émetteur-récepteur (36) dont ledit premier dispositif (1) est équipé d'au moins une seconde unité extérieure.
